# EUROPEAN PATENT APPLICATION

(11) **EP 1 460 172 A1**
(43) Date of publication of application: **22.09.2004**
(21) Application number: 04006121.0
(22) Date of filing: 15.03.2004
(51) Int. Cl.: D21F 7/08

(54) **Wet paper web transfer belt**

(30) Priority: 19.03.2003 JP 2003074907
(71) Applicant: ICHIKAWA CO.,LTD., Tokyo (JP)
(72) Inventor: Inoue, Kenji, c/o Ichikawa Co., Ltd., Bunkyoku Tokyo (JP)
(74) Representative: Meddle, Alan Leonard

(57) **Abstract**

A wet paper web transfer belt 10 comprises a base body 30, a wet paper web side layer 11 and a machine side layer 12. The wet paper web side layer 11 is formed by a high molecular weight elastic section 50 and a fiber body 20. The fiber body 20 is hydrophilic, and at least a part of the fiber body 20 is exposed on the surface of the high molecular weight elastic section 50. The hydrophilic fiber body 20 exposed on the surface of the wet paper web side layer 11 holds water from a wet paper web and therefore, attachment of the wet paper web to the transfer belt, and the smoothness of removal the wet paper web from the transfer belt, are both improved without impairing the durability of the transfer belt.

## Description

### FIELD OF THE INVENTION

This invention relates to a wet paper web transfer belt hereinafter also referred to as a "belt", and more particularly to a belt for transferring a wet paper web at high speed.

### BACKGROUND OF THE INVENTION

Recently, a "closed draw" papermaking machine has been developed for achieving improved speed of operation. The closed draw papermaking machine lacks an open draw, that is, a part where the wet paper web is transferred without being supported. The closed draw structure avoids problems encountered in open draw papermaking machines, such as running out of paper. Consequently, improved production speed can be achieved.

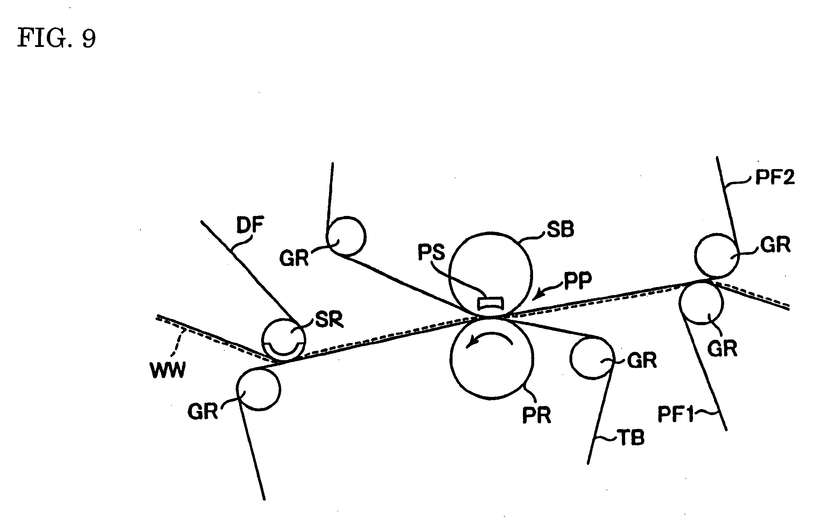

In a typical closed draw papermaking machine, as shown in FIG. 9, a wet paper web WW, represented by a broken line, is transferred from right to left, being supported in sequence by press felts PF1 and PF2, a wet paper web transfer belt TB, and a dryer fabric DF. Thus, the closed draw papermaking machine has no part where the wet paper web is unsupported. The press felts PF1 and PF2, the wet paper web transfer belt TB, and the dryer fabric DF, are endless belts, and are supported by guide rollers GR. The typical closed draw machine also includes a press roll PR, a shoe PS, a shoe press belt SB, and a suction roll SR, as shown in FIG. 9. The shoe PS has a concave shape which conforms to the press roll PR. The shoe PS, the shoe press belt SB, and the press roll PR form the press part PP of the machine.

In the operation of the closed draw papermaking machine, the wet paper web WW, which is continuous, successively passes through a wire part and a first press part (not shown), and is then transferred from press felt PF1 to press felt PF2. Then, press felt PF2 transfers the wet paper web to the press part PP. The wet paper web WW, pinched between the press felt PF2 and the wet paper web transfer belt TB, is compressed by the shoe PS, the shoe press belt SB, and the press roll PR.

The press felt PF2 has high water permeability, but the wet paper web transfer belt TB has low water permeability. Therefore, water in the wet paper web WW moves into the press felt PF2 at the press part PP.

As the press felt PF2, the wet paper web WW and the wet paper web transfer belt TB move out of the press part, the pressure applied to them is suddenly released and their volume expands. This expansion, and the capillary action of the pulp fiber forming the wet paper web WW, cause some rewetting, wherein part of the water in the press felt PF2 moves back into the wet paper web WW. However, since the wet paper web transfer belt TB has very low permeability, it does not hold water. Therefore, no substantial rewetting occurs while the wet paper web is supported by the transfer belt TB. Thus, the wet paper web transfer belt contributes to improvement in the efficiency of water removal from the wet paper web.

The wet paper web WW, which moves out of the press part PP, is transferred by the wet paper web transfer belt TB to the suction roll, where the wet paper web becomes attached by suction to the dryer fabric DF, on which it is transferred to a drying stage.

It is important for the transfer belt TB to be able to release the wet paper web smoothly for transfer of the wet paper web to the dryer fabric at the suction roll, and various transfer belt structures have been proposed for realizing this objective.

An example of a transfer belt structure designed for smooth release of the wet paper web is the structure described in Unexamined Japanese Patent Publication No. 89990/2001, in which the wet paper web side layer comprises a high molecular weight elastic section and a fiber body, and either the high molecular weight elastic section or the fiber body comprises a hydrophobic material. In this wet paper web transfer belt, the hydrophobic material breaks the thin water film formed between the wet paper web and the transfer belt after the transfer belt carrying the web moves out of the press part of the machine. This transfer belt transfers the wet paper web smoothly to the next stage of the papermaking process smoothly.

On the other hand, it is also recognized that it is important for the wet paper web to be actively attached to the surface of the transfer belt immediately after the wet paper web moves out of the press part.

The wet paper web transfer belt, as described in Japanese Patent Publication No. 89990/2001, does not always function well, because the wet paper web does not attach to the surface of the belt smoothly immediately after it moves out of the press part. Since the belt is formed to break the water film actively, immediately after moving out of the press part, the wet paper web may fail to attach to the surface of the belt. The wet paper web itself sometimes contains only a small quantity of water immediately after it moves out of the press part, depending on the structure of the papermaking machine or the kind of the wet paper web which is to be manufactured. As a result, breakage of the wet paper web may occur prior to, or at the time of, its transfer to the next stage of the papermaking process.

In view of the above problems, an object of the invention is to provide a wet paper web transfer belt, to which a wet paper web attaches smoothly and reliably, and from which the wet paper web can be transferred smoothly to a next stage in the papermaking process.

### SUMMARY OF THE INVENTION

The wet paper transfer belt in accordance with the invention, for use in the press part of a closed draw papermaking machine, comprises a base body, a wet paper web side layer having a wet paper web side surface, and a machine side layer. In order to solve the above-mentioned problems, the wet paper web side layer comprises a high molecular weight elastic section and a hydrophilic fiber body, and at least a part of the fiber body is exposed on said wet paper web side surface. Preferably, the official moisture regain of the fiber body is at least 4%, and hydrophilic treatment is applied to the surface of the exposed part of the fiber body. The term "official moisture regain" refers to a numerical value calculated by the formula for "official moisture regain", specified in JIS L0105 (General Rules for Physical Testing Methods for Textiles).

According to the invention, the hydrophilic fiber body, exposed on the surface of the wet paper web side layer, holds water from the wet paper web. Therefore, the wet paper web becomes attached reliably to the transfer belt, and is removed smoothly from the transfer belt when transferred to the next stage of the papermaking process. Consequently, the wet paper web transfer belt can be used reliably over a long time.

### BRIEF DESCRIPTION OF DRAWINGS

FIG. 1 is a cross-sectional view taken on a plane extending in the cross machine direction, schematically showing a wet paper web transfer belt according to the invention;

FIG. 2 is a plan view, schematically showing a wet paper web transfer belt according to the invention;

FIG. 3 is an schematic view for explaining the functions of a wet paper web transfer belt according to the invention;

FIG. 4 is another schematic view for explaining the functions of a wet paper web transfer belt according to the invention;

FIG. 5 is a cross-sectional view of a wet paper web transfer belt of an embodiment of the invention;

FIG. 6 is a cross-sectional view of a wet paper web transfer belt of another embodiment of the invention;

FIG. 7 is a cross-sectional view of a wet paper web transfer belt of still another embodiment of the invention;

FIG. 8 is a schematic view of an apparatus for evaluating the performance of examples of wet paper web transfer belts; and

FIG. 9 is a schematic view of a typical closed draw paper-making machine.

### DETAILED DESCRIPTION OF THE PREFERRED EMBODIMENTS

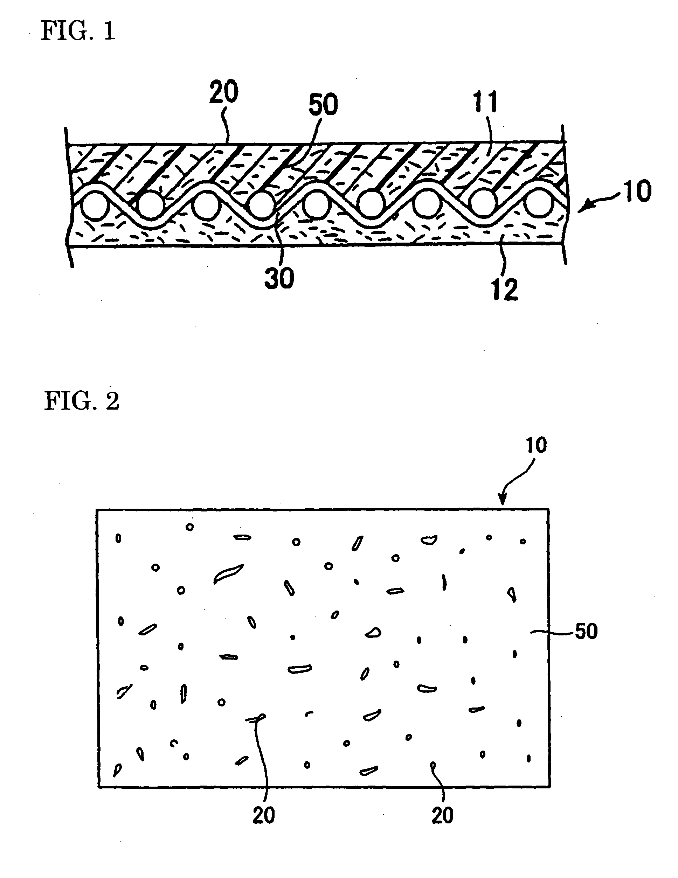

The wet paper web transfer belt 10 shown in FIGS. 1 and 2 comprises a base body 30, a wet paper web side layer 11 and a machine side layer 12. The wet paper web side layer 11 is formed from a high molecular weight elastic section 50 and a fiber body 20. The fiber body 20 is hydrophilic, and a part of the fiber body 20 is exposed on the surface of the high molecular weight elastic section 50. The terms "exposed" and "exposure" refer to a condition in which fibers 20 appears on the surface of the high molecular weight elastic section 50, regardless of whether or not the fibers of the fiber body 20 protrude from the surface of the high molecular weight elastic section.

At least the parts of the fiber body exposed at the surface of the high molecular weight elastic section 50 are hydrophilic. The terms "hydrophilicity" and "hydrophilic" signify a property by which the fiber body attracts, and/or holds, water. By way of a concrete example, a hygroscopic fiber has hydrophilicity because moisture absorption by the fiber causes the fiber to have an affinity for water.

As a result of the tests described below, it was determined that excellent results may be obtained when the official moisture regain of a hygroscopic fiber body of a belt according to the invention is at least 4.0%, preferably 5% or more.

Various material having official moisture regain values of 4.0% or more can be used. Examples of such materials, and their official moisture regain values, include nylon (4.5%), vinylon (5.0%), rayon (11.0%), cotton (8.5%), wool (15.0%) etc. Fibers with hydrophilic treatments applied to their surfaces may also be used as the fibers of fiber body 20. It is only necessary that the exposed portions of the fiber body 20 be hydrophilic. Accordingly, the hydrophilic treatment can be carried out on the exposed parts of the fiber body. However, in practice, hydrophilic treatment will ordinarily be carried out on the entire fiber body prior to incorporation of the fibers into the high molecular weight elastic material. Both chemical and other hydrophilic treatments can be used. Mercerization, resin treatment, sputtering by ionizing radiation, glow discharge processing, etc. are examples of hydrophilic treatments generally known to those skilled in the art.

Excellent results may be obtained from hydrophilic treatment when the moisture content of monofilament or cotton yarn to which hydrophilic treatment is applied is 30-50%, and the contact angle with water is 30E or less. The percentage moisture content of the monofilament or cotton yarn is calculated using the formula: (weight of water/total weight) X 100.

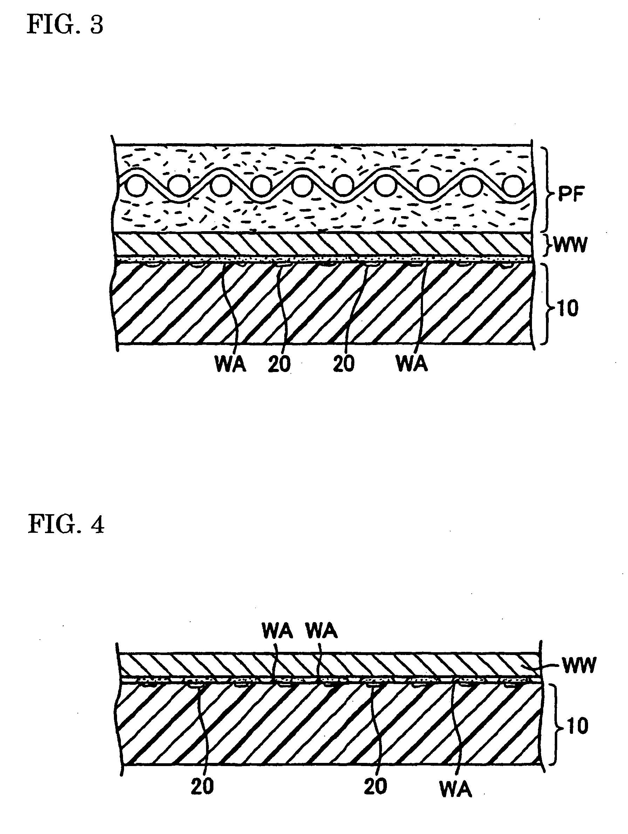

The functions of a wet paper web transfer belt according to the invention will be explained, referring to the Figures 3 and 4.

In FIG. 3, a wet paper web WW is shown pinched between the press felt PF and the wet paper web transfer belt 10 at the press part of a papermaking machine. At this point, most of water from the wet paper web has moved to the press felt PF, since the permeability of the wet paper web transfer belt 10 is very low. The water WA from the wet paper web WW fills a space between the wet paper web WW and the wet paper web transfer belt 10.

Immediately after the press felt PF, the wet paper web WW, and the transfer belt 10, move out of the press part, the water which fills the space between the wet paper web WW and the wet paper web transfer belt 10 is drawn toward the hydrophilic fiber body 20, as shown in FIG. 4. The water held in the hydrophilic fiber body 20 enables the wet paper web WW to be attached to the wet paper web transfer belt 10.

After the wet paper web transfer belt 10 and the wet paper web WW travel through a distance from the press part, the wet paper web WW is transferred to the next stage of the papermaking process. The water between the wet paper web transfer belt 10 and the wet paper web WW is held by the hydrophilic fiber body 20. However, since this water is not in the shape of a film, which would generate strong adhesion, the wet paper web WW can be transferred smoothly to the next stage of the process.

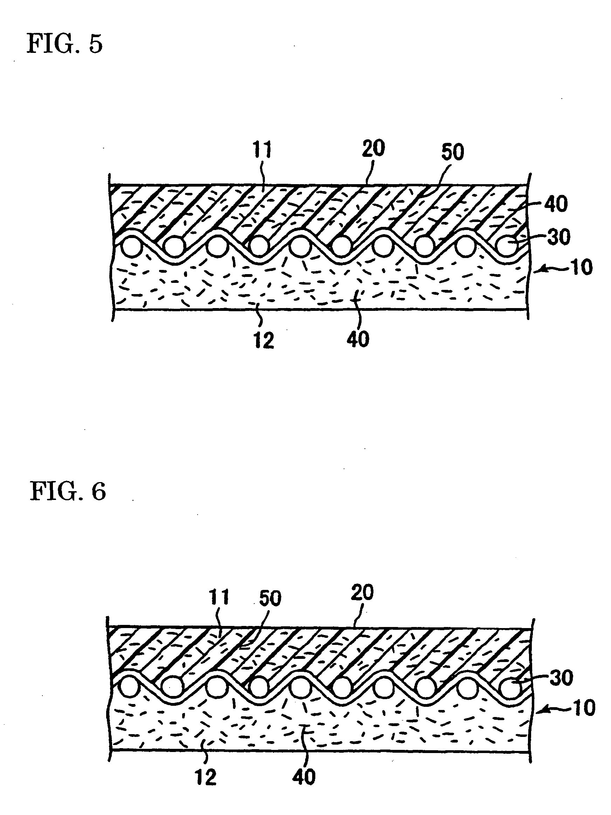

In the first embodiment of the invention, as shown in cross-sectional view in FIG. 5, a wet paper web transfer belt 10 comprises a base body 30, a wet paper web side layer 11, and a machine side layer 12. The machine side layer 12 comprises a batt layer 40 composed of staple fibers intertwiningly integrated with the machine side of the base body 30. The wet paper web side layer 11 comprises a high molecular weight elastic section 50 formed by impregnating a high molecular weight elastic material into a batt layer 40 comprising the staple fibers constituting the fiber body 20. The fibers of the batt layer are intertwiningly integrated with the wet paper web side of the base body 30 and the high molecular weight elastic material is cured. A part of the fiber body 20 is exposed on the surface of the high molecular weight elastic section 50 by grinding the surface of the wet paper web side layer 11, comprising the high molecular weight elastic section 50, with sandpaper or a whetstone etc., thereby exposing a part of the batt layer 40.

In the second embodiment, as shown in cross-sectional view in FIG. 6, the paper web transfer belt 10 comprises a base body 30, a wet paper web side layer 11, and a machine side layer 12. Here, the wet paper web side layer 11 comprises a high molecular weight elastic section 50 formed on a wet paper web side of the base body 30, and the machine side layer 12 comprises a batt layer 40 comprising a staple fiber intertwiningly integrated with the machine side of the base body 30. A part of the fiber body 20 is exposed on the surface of the high molecular weight elastic section 50. In this embodiment, the fiber body 20 is mixed in a liquid, high molecular weight, elastic material when the high molecular weight elastic section 50 is formed. After the high molecular weight elastic material in which the fiber body 20 is mixed is cured, the fiber body 20 is exposed by grinding the surface of the high molecular weight elastic section 50 with sandpaper or a whetstone, etc.

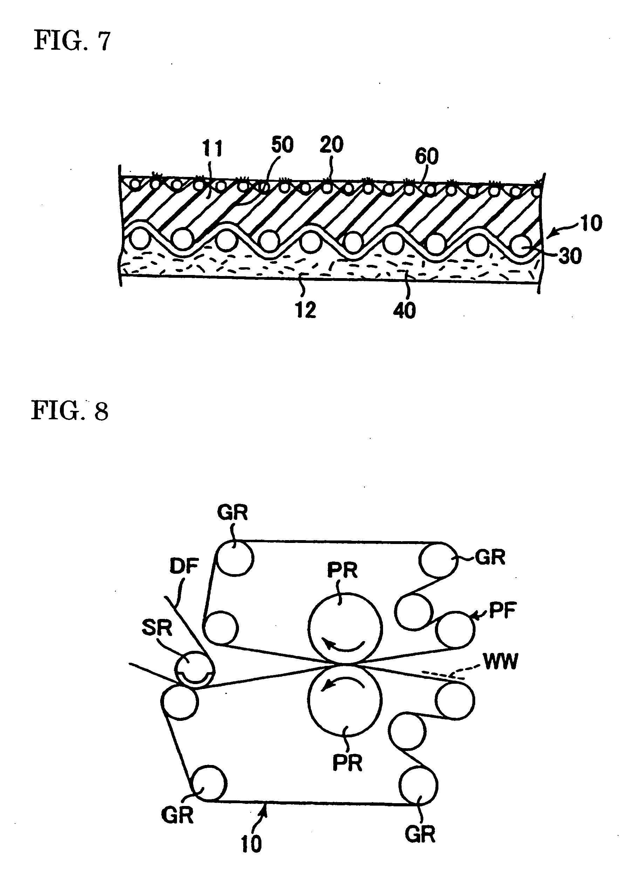

In the third embodiment, as shown in cross-sectional view in FIG. 7, the wet paper web transfer belt 10 comprises a base body 30, a wet paperweb side layer 11 and a machine side layer 12. Here, the wet paper web side layer comprises a high molecular weight elastic section 50, formed on a wet paper web side of the base body 30, and the machine side layer 12 comprises a batt layer 40 comprising staple fibers bonded to the machine side of the base body 30. A fiber body 20 is exposed on the surface of the wet paper web side layer 11. This fiber body 20 may be obtained by providing a belt-shaped woven fabric 60 on the surface layer of the high molecular weight elastic section 50. In the case of FIG. 7, the fiber body 20 is exposed by grinding the surface of the wet paper web side layer 11 with sandpaper or a whetstone, etc., after the woven fabric 60 is provided in a surface layer of the high molecular weight elastic section 50.

After the high molecular weight elastic section 50 is formed to the desired height, the woven fabric 60 is provided on the wet paper web side of this high molecular weight elastic section 50. A liquid, high molecular weight elastic material is impregnated into the surface of the woven fabric 60 until its surface is coated with the high molecular weight elastic material, and the high molecular weight elastic material is cured.

when multifilament yarns, which are an aggregate of many continuous thin filaments, are used as the yarns of the woven fabric 60, many fibers may be exposed easily by grinding the surface to cut the multifilament yarns by abrasion.

As an alternative, in a structure similar to that of FIG. 7, a non-woven fabric, such as spun bond, may be used instead of the woven fabric 60.

As a still further alternative, the base body 30 itself may be exposed by grinding. In this case, a base body 30 composed of a multi-woven fabric, or a plurality of overlapping base bodies 30, integrated by a batt, may be used.

In each of the above cases, exposure of the fiber body 20, at the surface of the belt, may be obtained by grinding the surface of a wet paper web side layer 11 comprising a high molecular weight elastic section 50 as described above. The wet paper web side layer 11, of a wet paper web transfer belt 10 according to the invention, contributes to the formation of a paper having excellent surface properties, since the smoothness of its wet paper web-contacting surface is greater than that of the wet paper web-contacting surface of a press felt PF.

The fibers which form the fiber body 20 require sufficient strength to prevent the fiber body 20 from being cut by grinding. Therefore, it is desirable that the strength of these fibers be 0.8g/dtex or more.

Thermosetting resins, thermoplastic resins, etc. may be adequate for use as a materials for a high molecular weight elastic section. It is optional to select hydrophobic or hydrophilic materials, or to mix filler therein.

A suitable wet paper web transfer belt according to the invention preferably has zero permeability. On the other hand, some papermaking machines may require a belt having some degree of permeability. In this case, the desired structure may be obtained by reducing the amount of impregnated high molecular weight elastic material, by increasing the amount of grinding, or by using a high molecular weight elastic material with open cells. However, even in the case of a belt having some permeability, it is preferable that the permeability be 2cc/cm²/sec or less, in view of the objects of a wet paper web transfer belt. Permeability may be measured, using a fragile type testing machine by the method specified in JIS L 1096 ("A Testing Method for Woven Fabrics").

The purpose of the base body 30 is to impart strength to the wet paper web transfer belt as a whole. Although a woven fabric incorporating machine direction yarns and a cross machine direction yarns is shown in Figures 5-7, the base body may have various other structures as appropriate, such as, yarns disposed in the machine direction and cross machine direction, but overlapped rather than woven, or films, knitted fabrics, or belt-shaped bodies of relatively large width made by winding a relatively narrow belt-shaped body in a helix, wherein the turns overlap one another.

The machine side layers 12 of the wet paper web transfer belts 10 of Figures 5-7 are constituted by a batt layer 40. However, as an alternative, the machine side layer 12 may be formed from a batt layer impregnated with a high molecular weight elastic material, or from a high molecular weight elastic section alone.

Examples 1 and 2 of a wet paper web transfer belt according to the invention, and a Comparative Example 1, were produced by the following process:
Step 1: A needle felt was obtained by intertwiningly integrating fiber mats with the outer and inner surfaces of an endless woven fabric by needle punching respectively.
Step 2: The density of the staple fibers was made about 0.50g/cm³ by heat-pressing the needle felt.
Step 3: Urethane resin was impregnated into the needle felt from its outer surface. In the impregnation step, the urethane resin was impregnated into the middle of the woven fabric, and also coated the outer surface of the needle felt.
Step 4: The urethane resin was cured.
Step 5: The surface of the urethane resin was ground, using sandpaper.

In Example 1, fiber mats comprising rayon staple fiber (official moisture regain=11%), with a thickness of 6 dtex, were used, and consequently, after the grinding step, rayon fiber bodies were exposed on the outer surface of the wet paper web side of the transfer belt.

In Example 2, a nylon-6 staple fiber (official moisture regain=4.5%), with a thickness of 6 dtex, was used, and consequently nylon fiber bodies were exposed on the outer surface of the wet paper web side of the transfer belt.

In Comparative Example 1, a polyester staple fiber (official moisture regain=0.4%) with a thickness of 6 dtex was used. Consequently, polyester fiber bodies were exposed on the outer surface of the wet paper web side of the transfer belt.

Tests of the above examples of wet paper web transfer belts were conducted by using the apparatus shown in FIG. 8. This apparatus comprises a pair of press rolls PR forming a press part, a press felt PF, pinched between the press rolls PR, and a wet paper web transfer belt 10. The press felt PF and the wet paper web transfer belt 10 were supported at a predetermined tension by a plurality of guide rolls GR, and were moved by rotation of the press rolls. An endless dryer fabric DF, shown in part in FIG. 8, was also supported and driven by guide rolls (not shown).

A wet paper web WW was placed on the wet paper web transfer belt of the test apparatus on the upstream side relative to the press part. The wet paper web WW passed through the press part and was transferred to a suction roll SR by the wet paper web transfer belt 10. The suction roll, in turn transferred the wet paper web WW to the dryer fabric DF.

The performance of the wet paper web transfer belt was evaluated, by visual observation, with respect to transfer stability of the wet paper web WW on the web transfer belt 10 immediately after the wet paper web moved out of a press part, and also with respect to the stability of transfer of the wet paper web WW to the dryer fabric DF.

The tests were conducted under the condition where the driving speed of the test apparatus was 150m/min, the applied pressure in the press part was 40kg/cm, and the vacuum at the suction roll SR was 150mmHg. Wet paper webs WW comprising kraft pulp with a basis weight of 80g/m², and dryness of 40%, 45% and 50% were used.

The press felt PF had a conventional structure, comprising a woven fabric, and a batt layer intertwiningly integrated with the woven fabric by needle punching. The press felt PF had a basis weight of 1200g/m². The fineness of its batt fiber was 5.6 dtex and the density the felt was 0.45g/cm³.

The results of tests are shown in the following table.

| Dryness of wet paper web at press exit (%) | Example I | | Example 2 | | Comparative Example 1 | |
|---|---|---|---|---|---|---|
| | Attachment of wet paper web at press exit | Transfer of wet paper web to next process | Attachment of wet paper web at press exit | Transfer of wet paper web to next process | Attachment of wet paper web at press exit | Transfer of wet paper web to next process |
| 40 | Good | Good | Good | Good | Good | Good |
| 45 | Good | Good | Good | Good | Fail | - |
| 50 | Good | Good | Fail | - | Fail | - |

As a result of the tests, it was determined that, regardless of the dryness of a wet paper web, Example 1 fully realized the functions required for a wet paper web transfer belt. That is, it reliably transferred the wet paper web WW attached to itself after the wet paper web transfer belt moved out of the press part, and the wet paper web separated smoothly from the wet paper web transfer belt when transferred to the next stage of the papermaking process.

In the case of Example 2, no problems were encountered in the case of wet paper webs having dryness levels of 40% and 45%. However, the wet paper web having a dryness of 50% shifted to the press felt after moving out of the press part. Therefore, it was determined that, when a wet paper web had a low level of dryness (that is, it contained a larger amount of moisture), Example 2 functioned well. However, when the wet paper web had a high level dryness, too much of the water film, formed between the wet paper web WW and the transfer belt, was broken immediately after the wet paper web moved out of the press part.

In the case of Comparative Example 1, no problems were encountered at a dryness level of 40%. However, in the case of wet paper webs having dryness levels of 45% and 50%, the wet paper webs shifted to the press felt after moving out of the press part.

Therefore, it was concluded that it was difficult to use Comparative Example 1 as a wet paper web transfer belt in practice, except under strictly limited conditions with respect to the structure of the apparatus and the wet paper web.

In summary, according to the invention, a hydrophilic fiber body, exposed on the surface of a wet paper web side layer, holds water from the wet paper web. Therefore, attachment of the wet paper web to the transfer belt, and the smoothness of removal the wet paper web from the transfer belt, are improved without impairing the durability of the transfer belt.

## Claims

1. A wet paper transfer belt for use in the press part of a closed draw papermaking machine, comprising a base body, a wet paper web side layer having a wet paper web side surface, and a machine side layer, wherein said wet paper web side layer comprises a high molecular weight elastic section and a hydrophilic fiber body, and at least a part of the fiber body is exposed on said wet paper web side surface.

2. A wet paper web transfer belt as claimed in claim 1 , wherein hydrophilic treatment is applied to the surface of the exposed part of the fiber body

3. A wet paper web transfer belt as claimed in claim 1, wherein the official moisture regain of said fiber body is at least 4%.

4. A wet paper web transfer belt as claimed in claim 1 or 3, wherein hydrophilic treatment is applied to the surface of the exposed surface of the fiber body.
